# EUROPEAN PATENT SPECIFICATION

(11) **EP 4 461 764 B1**
(45) Date of publication and mention of the grant of the patent: **14.01.2026**
(21) Application number: 23172356.0
(22) Date of filing: 09.05.2023
(51) Int. Cl.: C08G 77/54, C08L 83/14, C09D 183/08, C09D 183/14, C09D 5/14

(54) **CURABLE ORGANOSILOXANE RESINS CONTAINING BORON**
BOR ENTHALTENDE HÄRTBARE ORGANOSILOXANHARZE
RÉSINES D'ORGANOSILOXANE RÉTICULABLES CONTENANT DU BORE

(43) Date of publication of application: 13.11.2024
(73) Proprietor: Henkel AG & Co. KGaA, 40589 Düsseldorf (DE)
(72) Inventor: Geitner, Felix, 40822 Mettmann (DE); Gutacker, Andrea, 40764 Langenfeld (DE); Duracu, Adrian, 40589 Düsseldorf (DE); Zhao, Ligang, 40593 Düsseldorf (DE); Salazar La Rosa, Abel David, 40223 Düsseldorf (DE); Mejia, Esteban, 18059 Rostock (DE)

(56) References cited:
- WO-A1-2020/239615
- CN-A- 111 378 168

## Description

The invention relates to curable resins based on organosiloxanes containing boron and to cured boron functionalized siloxane resins, optionally also comprising a curing catalyst. The present invention is also directed to a method for preparing the boron-functionalized siloxane resins and the use thereof as an antimicrobial agent, adhesion promoter, surface treatment agent, fiber treatment agent , formulation or paint additive. The cured boron functionalized siloxane resins according to the present invention show excellent antimicrobial activity, especially against gram-positive bacteria, gram-negative bacteria and black yeast. The invention also relates to adhesive, sealant, and/or coating materials comprising said curable organosiloxane resins containing boron.

Polymer systems which possess reactive crosslinkable silyl groups, for example alkoxysilyl groups, have long been known. In the presence of atmospheric moisture these alkoxysilane-terminated polymers are able to condense with elimination of the alkoxy groups. Depending on the amount of alkoxysilane groups and their structure, mainly long-chain polymers (thermoplastics), relatively wide-meshed three-dimensional networks (elastomers) or highly crosslinked systems (thermosets) form.

Silicone polymers (polyorganosiloxanes), particularly polydialkylsiloxanes such as polydimethylsiloxane (PDMS), have great importance in the production of adhesive, sealing, coating, and insulation materials. Among these, those that vulcanize at low temperatures and under ambient conditions constitute a significant share of the market. Typical formulations contain a reactive polyorganosiloxane, in particular a silanol-terminated polyorganosiloxane having at least one, preferably two hydroxy groups bound to a silicon atom. It is typically used in combination with a silane-based crosslinker which has hydrolysable groups such as alkoxy groups bound to the silicon atom as described in, for example EP 0 564 253 A1. While the polyorganosiloxane and crosslinker can be present as separate components, both can also be reacted with each other to form a modified polyorganosiloxane which can then be used in a curable composition. The term endcapping (end group capping) is also used in this regard. This can be carried out optionally in the presence of a catalyst, whereby the catalyst is to mediate the endcapping selectively without simultaneously curing the polyorganosiloxane.

The uses and possible applications of such silane-terminated polyorganosiloxane systems are equally diverse. They can, for example be used to produce elastomers, sealants, adhesives, elastic adhesive systems, rigid and flexible foams, a wide variety of coating systems and in the medical field, for example, for impression materials in dentistry. These products can be applied in any form, such as painting, spraying, casting, pressing, filling and the like.

Numerous crosslinkers that act as endcapping or functionalizing moieties for the respective polymer backbone are known in the art. Besides their functionality used for coupling to the polymer backbone, these can be differentiated into acidic, basic, and neutral crosslinkers based on the type of leaving groups released during hydrolysis. Typical acidic crosslinkers contain acid groups as hydrolysable groups and release the corresponding acids, e.g., acetic acid, during the crosslinking. Typical basic crosslinkers release amines during the crosslinking. Typical representatives of neutral crosslinkers have hydrolysable groups, which release alcohols or oximes during the crosslinking, such as methanol or ethanol.

Although the above-described polyorganosiloxane-based compositions are associated with many advantages, the resulting formulations sometimes suffer from poor antimicrobial activity.

On the other hand, silicone polymers (polyorganosiloxanes) with antimicrobial activity have also been known. For example, WO 2018/005190 A1 describes an antimicrobial curing system which includes silicones and onium-containing compounds; the two not being covalently bonded to each other. One of various drawbacks presented by this system is the loss by leaching of the onium-functionalized compounds, i.e., compounds comprising groups of the 15^{th} or 16^{th} group of the periodic table, which groups are responsible for the antimicrobial activity.

Similarly, WO 2020/239615 A1 discloses onium-functionalized siloxanes with antimicrobial activity. The main drawback of this onium-containing system is its limited stability, being prone to hydrolysis and to thermal decomposition, leading to degradation of the cured materials.

Besides, antimicrobial activity of boron compounds has also been known and boron compounds have been discussed as substitutes for antibiotics (e.g., Fink, K.; Uchman, M.. Boron cluster compounds as new chemical leads for antimicrobial therapy Coord. Chem. Rev., 2021, 431, 213684). However, introduction of boron functionalities into curable siloxanes has not been contemplated.

CN 115637451 A relates to the technical field of polysilane preparation, in particular to a specific boron-containing double bond polysilane and to a preparation method thereof, which are applied in the technical field of polymer ceramic precursor materials. It discloses a method for preparation of a liquid boron-containing double-bond polysilane using sodium cyanoborohydride. However, antimicrobial activity of said component has not been examined and organosiloxanes as claimed are also not mentioned in this reference.

X. Zhao, C. Zane, Y. Sun, K. Liu, Y Wen, and Q. Jiao. Borosiloxane oligomers for improving adhesion of addition-curable liquid silicone rubber with epoxy resin by surface treatment J Mater Sci (2018) 53:1167-1177 describes synthesis of borosiloxane oligomers by reacting H₃BO₃ with 3-Glycidoxypropyltrimethoxysilane (GPMS). However, antimicrobial activity of said oligomers has not been examined and organosiloxanes as claimed are also not mentioned in this reference.

Z. Pan, B. Huang, L. Zhu and K. Zeng Synthesis of a boron-containing adhesion promoter for improving the adhesion of addition-cure silicone rubber to PPA Journal of Adhesion Science and Technology httpsi/doi.org/10.1080/01694243.2019.1685758 deals with synthesis and characterization of a boron-containing adhesion promoter PhBSiO with a high refractive index and MeBSiO with a low refractive index. However, antimicrobial activity of said components has not been examined and alkoxysilanes as claimed are also not mentioned in this reference.

In view of the above, it is an object of the present invention to provide curable compositions (resins) which, especially in cured state, show improved antimicrobial activity, especially against gram-positive bacteria, gram-negative bacteria and black yeast.

The present invention achieves said object by providing a curable composition comprising
(A) at least one boron containing siloxane resin with constitutional units of the general formula (I)

   (Y-Z)ₙSiR¹ₘXₚO_{q} (I)

   wherein:
   R¹ groups may be the same or different and each is independently selected from a hydrogen atom or a linear, branched, or cyclic hydrocarbon residue having 1 to 20 carbon atoms which may contain at least one heteroatom;
   X is a hydrolysable group, including, but not limited to OH (hydroxy), Cl, Br, I, or OR² (alkoxy or aryloxy), wherein R² is a linear, branched or cyclic hydrocarbon residue having 1 to 20 carbon atoms which may contain at least one heteroatom ;
   Z is selected from a linear, branched or cyclic hydrocarbon residue having 2 to 60 carbon atoms which may contain at least one heteroatom;
   Y is a boron containing group;
   n, and q are integers from 1 to 3, and m and p are integers from 0 to 2 wherein n+m+p+q =4;
(B) optionally, at least one curing catalyst.

It has been found that the cured boron containing siloxane resin disclosed herein provides for excellent antimicrobial activity, especially against gram-positive bacteria, gram-negative bacteria and black yeast and preferably at least 95.00 %, more preferably at least 99.90 %, most preferably at least 99.99 %, antimicrobial activity is observed after at least 24h testing.

In a first aspect, the present invention therefore relates to a curable composition comprising at least
(A) one boron containing siloxane resin (A) consisting of constitutional units of formula (I)

   (Y-Z)ₙSiR¹ₘXₚO_{q} (I)

   wherein:
   R¹ groups may be the same or different and each is independently selected from a hydrogen atom or a linear, branched or cyclic hydrocarbon residue having 1 to 20 carbon atoms which may contain at least one heteroatom;
   X is a hydrolysable group, including, but not limited to OH (hydroxy), Cl, Br, I, or OR² (alkoxy or aryloxy), wherein R² is a linear, branched or cyclic hydrocarbon residue having 1 to 20 carbon atoms which may contain at least one heteroatom ;
   Z is selected from a linear, branched or cyclic hydrocarbon residue having 2 to 60 carbon atoms which may contain at least one heteroatom;
   Y is a boron containing group;
   n, and q are integers from 1 to 3 and m and p are integers from 0 to 2 wherein n+m+p+q =4;
(B) optionally, at least one curing catalyst.

In another aspect, the invention relates to an adhesive, sealant, or coating material comprising the curable composition of the invention.

The invention further relates to the use of a curable composition of the invention as an adhesive, sealant, or coating material.

As used herein, the singular forms "a", "an" and "the" include plural referents unless the context clearly dictates otherwise.

"About", as used herein in relation to numerical values means the referenced value ±10%, preferably ±5%.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

The terms "comprising" and "comprises" as used herein are synonymous with "including", "includes", "containing" or "contains", and are inclusive or open-ended and do not exclude additional, non-recited members, elements, or method steps.

When amounts, concentrations, dimensions and other parameters are expressed in the form of a range, or a preferable range having an upper limit value and a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "preferred" and "preferably" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

As used herein, room temperature is 23 °C plus or minus 2 °C.

As used herein, "constitutional unit" refers to a group of atoms comprising a part of the essential structure of a macromolecule or an oligomer molecule. Constitutional units in the same macromolecule or oligomer can be the same, or different from each other.

As used herein, "resin" refers to a solid or highly viscous substance, usually a polymer, macromolecule, or oligomer, usually containing prepolymers with reactive groups.

A "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In the context of the present invention, "curable" predominantly relates to the property of the boron containing siloxane resin (A) of formula (I) to condensate.

The molecular weights given in the present text refer to number average molecular weights (Mn), unless otherwise stipulated. All molecular weight data refers to values obtained by liquid-chromatography-mass spectrometry (LC-MS), or gel permeation chromatography (GPC), more preferably by gel permeation chromatography (GPC).

As used herein, "polydispersity" refers to a measure of the distribution of molecular mass given in a resin sample. The polydispersity is calculated by dividing the weight average molecular weight (Mw) by the number average molecular weight (Mn).

For convenience in the description of the process of this invention, unsaturation provided by CH₂=CH-CH₂- terminal groups is referred to as "allyl" unsaturation.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and, norbornane.

As used herein, an "C₆-C₁₈ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and, anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

As used herein, the term "alkenylene" group refers to a divalent aliphatic hydrocarbon group having at least one carbon-carbon double bond that is a radical of an alkene. An alkenylene group can be linear or branched and substitutes or unsubstituted.

As used herein, the term "alkynylene" group refers to a divalent aliphatic hydrocarbon group having at least one carbon-carbon triple bond, that is a radical of an alkyne. An alkynylene group can also have one or more carbon-carbon double bonds. An alkynylene group can be linear or branched and substituted or unsubstituted.

As used herein, the term "arylene" group refers to a divalent group that is a radical of an aryl group. Suitable arylene group includes phenylene, furanylene, piperidylene, and naphthylene.

As used herein, the term "aralkylene" group refers to a divalent group that is a radical of an aralkyl group. An aralkylene can be represented by the formula -R-Ar- where R is an alkylene and Ar is an arylene, i.e., an alkylene is bonded to an arylene. Suitable aralkylene groups includes xylylene and toluenylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as Cl, Br, F. Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine or iodine and correspondingly the term "halide" denotes fluoride, chloride, bromide, or iodide anions.

The term "pseudohalogen" refers to inorganic or organic groups which, when in the form of anions exhibit chemical properties similar to those of the halide ions. Pseudohalogen groups include, although are not exclusive to, azido (N₃), thiocyano (SCN) and cyano (CN).

As used herein, the term "boron containing" group refers to a fragment that has a trivalent boron, to which two branched or cyclic fragments are attached, such fragments can be C₁-C₈ alkyl, C₂-C₈ alkenyl, C₂-C₈ alkynyl, C₃-C₁₀ cycloalkyl groups and may contain at least one heteroatom. Also, the trivalent boron can be part of a cyclo-alkyl fragment forming a C-O-B-O-C linkage.

The boron containing siloxane resins (A) according to the present invention consist of constitutional units of the formula (I)

(Y-Z)ₙSiR¹ₘXₚO_{q} (I)

wherein:
R¹ groups may be the same or different and each is independently selected from a hydrogen atom or a linear, branched, or cyclic hydrocarbon residue having 1 to 20 carbon atoms which may contain at least one heteroatom;
X is a hydrolysable group, including, but not limited to OH (hydroxy), Cl, Br, I, or OR² (alkoxy or aryloxy), wherein R² is a linear, branched or cyclic hydrocarbon residue having 1 to 20 carbon atoms which may contain at least one heteroatom;
Z is selected from a linear, branched or cyclic hydrocarbon residue having 2 to 60 carbon atoms which may contain at least one heteroatom; preferred a linear hydrocarbon residue having 2 to 60 carbon atoms; more preferably having 2 to 20 carbon atoms; most preferably having 2 to 8 carbon atoms;
Y is a boron containing group; preferably a boronic ester group;
n, and q are integers from 1 to 3, and m and p are integers from 0 to 2 wherein n+m+p+q =4 and wherein in preferred embodiments n = 1-2; m = 0-1; p = 0-1 and q = 2-3.

Particularly preferred siloxane resins (A) include dimers, obtainable by partial condensation of two boron containing siloxane molecules, with constitutional units of the general formula (I) with n = 1 or 2; m = 0, 1 or 2; p = 0, 1 or 2; q = 1; and trimers, obtainable by partial condensation of three boron containing siloxane molecules, with constitutional units of the general formula (I), wherein the "central" organosilicone unit is preferably according to the general formula (I) with n = 1 or 2; m = 0 or 1; p = 0 or 1; and q = 2; and the two terminal organosilicone units are preferably according to the general formula (I) with n = 1 or 2; m = 0, 1 or 2; p = 0, 1 or 2; q = 1.

In preferred embodiments, R¹ and R² are independently selected from the group consisting of a C₁-C₁₂ alkyl group, more preferably C₁-C₈ alkyl group, a C₂-C₈ alkenyl group, a C₂-C₈ alkynyl group, a C₃-C₁₀ cycloalkyl group, a C₆-C₁₈ aryl group and a C₆-C₁₈ aralkyl group, which may contain at least one heteroatom, preferably selected from O, N, S, Si, P, Cl, Br or F.

In more preferred embodiments, R₁ and R₂ are independently selected from a C₁-C₈ alkyl group which may contain at least one heteroatom, preferably selected from O, N, S, Si, P, Cl, Br or F, most preferably being O; in particular methyl, ethyl, n-propyl, fluoropropyl, n-butyl, sec-butyl, or tert-butyl, or a C₆-C₁₈ aryl group which may contain at least one heteroatom, preferably selected from O, N, S, Si, P, Cl, Br or F, in particular phenyl, tolyl or benzoyl. In most preferred embodiments, R¹ and R² are independently selected from methyl or phenyl.

In various embodiments, the curable compositions contain the boron containing siloxane oligomer or resin (A) in an amount of about 15 to 100% by weight, preferably in an amount of about 30 to 100% by weight particularly preferably in an amount of about 50 to 100% by weight, based in each case on the total weight of the composition. If a mixture of boron containing siloxane resins is used, the amounts relate to the total amount of boron containing siloxane resins in the composition. If such a mixture is used, only one of the boron containing siloxane resins may be a boron containing siloxane resin as described herein. It is however preferred that essentially all, i.e., at least 50 wt.-%, preferably at least 70 or 80 wt.-%, of the boron containing siloxane resins used in the composition are those described herein.

The compositions of the invention crosslink in the presence of moisture and in so doing cure with the formation of Si-O-Si bonds.

The number average molecular weight Mn of the boron containing siloxane resin is for preference 290 to 5,000 g/mol (Daltons), more preferably 290 to 3,500 g/mol (Daltons), particularly preferably 290 to 2,500 g/mol (Daltons).

The curable compositions may comprise as an optional component (B) at least one curing catalyst, preferably selected from tin catalysts, titanium catalysts, aluminum catalysts, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. Component (B) can be added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, nonadecylic acid, myristic acid, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(lV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) oxide (e. g. di-n-octyltin oxide) or dialkyltin(IV) dicarboxylate, particularly di-n-butyltin dilaurate, di-n-butyltin diacetate, or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions can contain the curing catalyst (B) up to 2 % by weight, preferably in an amount of from about 0.001 to 2 % by weight, based in each case on the total weight of the composition. If a mixture of different catalysts is used, the amounts refer to the total amount in the composition. However, according to a particularly preferred embodiment of the invention, the curable composition is free of curing catalyst (B), i.e., it does not comprise a curing catalyst (B).

The curable composition can comprise at least one additional auxiliary substance, preferably selected, for example, from the group consisting of plasticizers, extenders, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which caries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

In preferred embodiments, the curable composition according to the invention comprises the following components in the stated proportions by weight:
at least one boron containing siloxane resin (A) about 15 to 100 wt.%, preferably 30 to 100 wt.%, more preferably 50 to 100 wt.%;
optionally, at least one curing catalyst (B) about 0 to 2 wt.%, preferably 0.001 to 2 wt.%, but most preferred without catalyst;
and, optionally, at least one or more auxiliary substance(s), wherein the proportions by weight add up to 100 wt.% and the proportions by weight are based on the total weight of the curable composition.

The preparation of the curable composition according to the invention can take place by simple mixing of the at least one boron containing siloxane resin (A), optionally the curing catalyst (B), and optionally the other ingredients described herein. This can take place in suitable dispersing units, e.g., a highspeed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to an adhesive, sealant, or coating material comprising the curable composition according to the invention.

The invention further relates to the use of the curable composition according to the invention as an adhesive, sealant, or coating material. A further field of application for the compositions is the use as a plugging compound, hole filler, or crack filler. The use as an adhesive and/or coating is preferred.

According to another aspect, the present invention relates to use of the boron containing siloxane resin of formula (I) as an antimicrobial agent, preferably against yeasts and bacteria (gram-positive or gram-negative).

The following examples serve to explain the invention, but the invention is not limited thereto.

### Example 1: Preparation of oligomer or resin from allyltrimethoxysilane and pinacol borane.

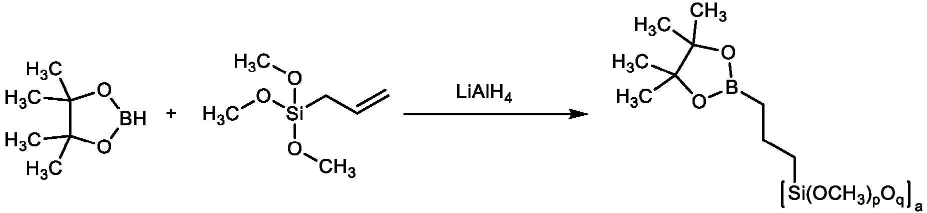

A 100 mL round bottomed Schlenk flask (flame dried) containing LiAlH₄ (0,1 mol% related to silane) and a magnetic stirrer bar was degassed under high vacuum (1x10⁻³ mbar) and flushed with argon. Then, allyltrimethoxysilane was added, and vigorous stirring started. Pinacolborane was added dropwise, avoiding violent bubbling. The flask was closed, and the mixture heated to 110°C for 3h. The mixture was left to cool down to room temp. (~23 °C). The solids were removed by filtration. The mixture was set under high vacuum (1x10⁻³ mbar) and heated to 110°C to remove all volatiles, after which the temperature was increased to 140°C to ensure a complete removal of volatiles. The obtained product (yield 70 wt.%) was a colorless, transparent viscous liquid. On contact with the atmosphere the liquid cures.

### ∘ Composition

The resin composition was assessed by LC-MS (LC Column: BEH-C18, 2.1 x 100 mm, 1,7 µm; Mobile phase: acetonitrile/ Ammonium acetate reverse phase, 15 min run time, 0.3 µL/min; Ionization: ESI and APCI in positive and negative ion modes; Solvent: dichloromethane), oligomeric molecules due to loss of Me-O-Me and MeOH units were detected. The resin contains mainly low degree of oligomers through Si-O-Si bond formation such as dimer, trimer, tetramer, pentamer, etc.

### o Gel permeation chromatography

The resin composition was assessed by Gel permeation chromatography (column set: 3 Polypore columns + guard; detector: RI; column temperature: 35°C; flow rate 1 ml/min; injection volume: 100 µl; run time 45 minutes; number of injections: 2/sample; mobile-phase: THF; standards for calibration: polystyrene (1.1 M - 162 Da); instrument: Waters 2695; sample concentration: 5.3 to 6.5 mg/1.5 ml) and the results are summarized in Table 1.

**Table 1**

| | Retention Time (min) | Mn (Da) | Mw (Da) | Mp (Da) | Mz (Da) | Polydispersity | Area |
|---|---|---|---|---|---|---|---|
| Silane oligomer | 28.30 | 761 | 881 | 588 | 1086 | 1.2 | 50.7% |
| | 28.90 | 426 | 430 | 433 | 434 | 1.0 | 25.2% |
| | 29.59 | 257 | 270 | 308 | 281 | 1.0 | 47.1% |
| | 31.71 | 119 | 120 | 127 | 121 | 1.0 | 5.6% |
| | 32.88 | 83 | 84 | 87 | 85 | 1.0 | 6.8% |

| | | | | | | | |
|---|---|---|---|---|---|---|---|
| *average molecular weights and distributions relative to polystyrene standards | | | | | | | |

### o Viscosity

Viscosity of the resin was measured in a ThermoScientific Rheostress 1 with ring/plate geometry under inert conditions, and it can be in the range from 24 mPas to 34 mPas.

### o UV stability

Cured material was set in a heated UV radiation chamber (light source: 10 UV-A light tubes (18W) with an irradiance of 3,15 mW/cm² and 10 UV-B light tubes (20W) with and irradiance of 2,21 mW/cm²) after 2 months under UV light and at 60°C no visual changes detectable.

### ∘ Thermal stability

Cured material was subjected to TGA tests (Waters Discovery (2013 series)), degradation of the material was observed at 285-305°C (roughly 300°C) in air atmosphere.

Thermal desorption tests (column: 30 m RTX-5ms fused silica capillary, 0.25 mm ID, 0.25 mm film thickness; oven temperature: 50°C for 2 min, to 300°C at 10°C/min, hold for 8 min; flow rate: 1 ml/min; injector port temperature: 225°C; injection: split 1:50; detector: 5973 MSD, electron impact (EI) ionization, 33-800 amu) of the cured material reveal that at 300°C no volatiles were detected. In pyrolysis studies heating to 800°C boron-containing volatiles could be detected, but no silicon containing volatiles.

### Example 2: Reduction of respective microorganisms in film contact method (DIN-EN-ISO 22196)

Antibacterial properties of films of the material were tested against *Staphylococcus aureus (gram pos. bactericum), Pseudomonas aeruginosa (gram neg. bacterium), Exophilia dermatitidis (black yeast)* using the Film-contact method (ISO 22196). This method measures the inactivation/killing of microorganisms (microbiocidal activity) after a certain incubation period. Reduction checked after 24h and 48h of contact. For investigations glass substrates coated with cured borolanosilane resin have been used.

**Table 2: Antimicrobial activity test**

| | *S*. *aureus* | | *P. aeruginosa* | | *E. dermatitis* | |
|---|---|---|---|---|---|---|
| | 24h | 48h | 24h | 48h | 24h | 48h |
| Siloxane resin consisting of constitutional units of formula I | 99.99% | | 99.90% | 99.99% | 99.99% | |
| Mixture of siloxane resin consisting of constitutional units of formula I and monomeric boron containing siloxane of formula (Y-Z)₁SiR¹₀X₃O₀ | 99.99% | | | 99% | 99.99% | |

## Claims

1. A curable composition comprising
(A) at least one boron containing siloxane resin consisting of constitutional units of formula (I)
(Y-Z)ₙSiR¹ₘXₚO_{q} (I)
wherein:
R¹ groups may be the same or different and each is independently selected from a hydrogen atom or a linear, branched, or cyclic hydrocarbon residue having 1 to 20 carbon atoms which may contain at least one heteroatom;
X is a hydrolysable group, including, but not limited to OH (hydroxy), Cl, Br, I, or OR² (alkoxy or aryloxy), wherein R² is a linear, branched or cyclic hydrocarbon residue having 1 to 20 carbon atoms which may contain at least one heteroatom;
Z is selected from a linear, branched or cyclic hydrocarbon residue having 2 to 60 carbon atoms which may contain at least one heteroatom;
Y is a boron containing group;
n, and q are integers from 1 to 3, and m and p are integers from 0 to 2 wherein n+m+p+q =4;
(B) optionally, at least one curing catalyst.

2. The curable composition according to claim 1, wherein R¹ and R² are independently selected from the group consisting of a C₁-C₁₂ alkyl group, a C₂-C₈ alkenyl group, a C₂-C₈ alkynyl group, a C₃-C₁₀ cycloalkyl group, a C₆-C₁₈ aryl group and a C₆-C₁₈ aralkyl group, which groups may contain at least one heteroatom.

3. The curable composition according to claim 2, wherein R¹ and R² are independently selected from the group consisting of a C₁-C₈ alkyl group which may contain at least one heteroatom or a C₆-C₁₈ aryl group which may contain at least one heteroatom.

4. The curable composition according to claim 2 to 3, wherein said heteroatom selected from O, N, S, Si, P, Cl, Br or F.

5. The curable composition according to claim 3 or4, wherein said C₁-C₈ alkyl group is selected from methyl, ethyl, n-propyl, fluoropropyl, n-butyl, sec-butyl, or tert-butyl.

6. The curable composition according to claim 3, 4 or 5, wherein said C₆-C₁₈ aryl group is selected from phenyl, tolyl or benzoyl.

7. The curable composition according to any one of claims 3 to 6, wherein R¹ and R² are the same or different and independently selected from methyl or phenyl.

8. The curable composition according to any one of claims 1 to 7 showing antimicrobial activity in cured state.

9. The curable composition according to any one of claims 1 to 8, wherein the curing catalyst (B) is selected from tin catalysts, titanium catalysts, aluminum catalysts, or zirconium catalysts, or mixtures thereof.

10. The curable composition according to any one of claims 1 to 9, wherein the curable composition does not comprise a curing catalyst (B).

11. The curable composition according to any one of claims 1 to 10, wherein n = 1-2; m = 0-1; p = 0-1 and q = 2-3.

12. The curable composition according to any one of claims 1 to 11, comprising dimers, obtainable by partial condensation of two boron containing siloxane molecules, with constitutional units of the general formula (I) with n = 1 or 2; m = 0, 1 or 2; p = 0, 1 or 2; q = 1; and/or trimers, obtainable by partial condensation of three boron containing siloxane molecules, with constitutional units of the general formula (I), wherein the "central" organosilicone unit is preferably according to the general formula (I) with n = 1 or 2; m = 0 or 1; p = 0 or 1; and q = 2; and the two terminal organosilicone units are preferably according to the general formula (I) with n = 1 or 2; m = 0, 1 or 2; p = 0, 1 or 2; q = 1.

13. The curable composition according to any one of claims 1 to 12, wherein
(i) the amount of the boron containing siloxane resin (A) is from about 15 to about 100 % by weight, preferably 30 to 100 % by weight, preferably 50 to 100 % by weight, based on the total weight of the composition; and/or
(ii) the amount of the curing catalyst (B) is 0 to about 2 % by weight, based on the total weight of the composition.

14. An adhesive, sealant, or coating material comprising the curable composition according to any one of claims 1 to 13.

15. Use of a curable composition according to any one of claims 1 to 13 as an adhesive, sealant, or coating material.

## Patentansprüche

1. Härtbare Zusammensetzung, umfassend
(A) mindestens ein borhaltiges Siloxanharz, bestehend aus Struktureinheiten von Formel (I)
(Y-Z)ₙSiR¹ₘXₚO_{q} (I)
wobei:
R¹-Gruppen gleich oder verschieden sein können und jeweils unabhängig voneinander aus einem Wasserstoffatom oder einem linearen, verzweigten oder cyclischen Kohlenwasserstoffrückstand ausgewählt sind, der 1 bis 20 Kohlenstoffatome aufweist, der mindestens ein Heteroatom enthalten kann;
X eine hydrolysierbare Gruppe ist, einschließlich, aber nicht beschränkt auf OH (Hydroxy), Cl, Br, I oder OR² (Alkoxy oder Aryloxy), wobei R² ein linearer, verzweigter oder cyclischer Kohlenwasserstoffrückstand ist, der 1 bis 20 Kohlenstoffatome aufweist, der mindestens ein Heteroatom enthalten kann;
Z aus einem linearen, verzweigten oder cyclischen Kohlenwasserstoffrückstand ausgewählt ist, der 2 bis 60 Kohlenstoffatome aufweist, der mindestens ein Heteroatom enthalten kann;
Y eine borhaltige Gruppe ist;
n und q ganze Zahlen von 1 bis 3 sind und m und p ganze Zahlen von 0 bis 2 sind, wobei n+m+p+q=4;
(B) optional mindestens einen Härtungskatalysator.

2. Härtbare Zusammensetzung nach Anspruch 1, wobei R¹ und R² unabhängig voneinander aus der Gruppe ausgewählt sind, bestehend aus einer C₁-C₁₂-Alkylgruppe, einer C₂-C₈-Alkenylgruppe, einer C₂-C₈-Alkinylgruppe, einer C₃-C₁₀-Cycloalkylgruppe, einer C₆-C₁₈-Arylgruppe und einer C₆-C₁₈-Aralkylgruppe, wobei die Gruppen mindestens ein Heteroatom enthalten können.

3. Härtbare Zusammensetzung nach Anspruch 2, wobei R¹ und R² unabhängig voneinander aus der Gruppe ausgewählt sind, bestehend aus einer C₁-C₈-Alkylgruppe, die mindestens ein Heteroatom enthalten kann, oder einer C₆-C₁₈-Arylgruppe, die mindestens ein Heteroatom enthalten kann.

4. Härtbare Zusammensetzung nach Anspruch 2 oder 3, wobei das Heteroatom aus O, N, S, Si, P, Cl, Br oder F ausgewählt ist.

5. Härtbare Zusammensetzung nach Anspruch 3 oder 4, wobei die C₁-C₈-Alkylgruppe aus Methyl, Ethyl, n-Propyl, Fluorpropyl, n-Butyl, sec-Butyl oder tert-Butyl ausgewählt ist.

6. Härtbare Zusammensetzung nach Anspruch 3, 4 oder 5, wobei die C₆-C₁₈-Arylgruppe aus Phenyl, Tolyl oder Benzoyl ausgewählt ist.

7. Härtbare Zusammensetzung nach einem der Ansprüche 3 bis 6, wobei R¹ und R² gleich oder verschieden und unabhängig voneinander aus Methyl oder Phenyl ausgewählt sind.

8. Härtbare Zusammensetzung nach einem der Ansprüche 1 bis 7, die eine antimikrobielle Aktivität in einem gehärteten Zustand zeigt.

9. Härtbare Zusammensetzung nach einem der Ansprüche 1 bis 8, wobei der Härtungskatalysator (B) aus Zinnkatalysatoren, Titankatalysatoren, Aluminiumkatalysatoren oder Zirconiumkatalysatoren oder Gemischen davon ausgewählt ist.

10. Härtbare Zusammensetzung nach einem der Ansprüche 1 bis 9, wobei die härtbare Zusammensetzung keinen Härtungskatalysator (B) umfasst.

11. Härtbare Zusammensetzung nach einem der Ansprüche 1 bis 10, wobei n = 1-2; m = 0-1; p = 0-1 und q = 2-3.

12. Härtbare Zusammensetzung nach einem der Ansprüche 1 bis 11, umfassend Dimere, die durch partielle Kondensation von zwei borhaltigen Siloxanmolekülen erhältlich sind, mit Struktureinheiten der allgemeinen Formel (I) mit n = 1 oder 2; m = 0, 1 oder 2; p = 0, 1 oder 2; q = 1; und/oder Trimere, die durch partielle Kondensation von drei borhaltigen Siloxanmolekülen erhältlich sind, mit Struktureinheiten der allgemeinen Formel (I), wobei die "zentrale" Organosiliconeinheit vorzugsweise der allgemeinen Formel (I) entspricht mit n = 1 oder 2; m = 0 oder 1; p = 0 oder 1; und q = 2; und die zwei endständigen Organosiliconeinheiten vorzugsweise der allgemeinen Formel (I) entsprechen mit n = 1 oder 2; m = 0, 1 oder 2; p = 0, 1 oder 2; q = 1.

13. Härtbare Zusammensetzung nach einem der Ansprüche 1 bis 12, wobei
(i) die Menge des borhaltigen Siloxanharzes (A) von etwa 15 bis etwa 100 Gew.-%, vorzugsweise 30 bis 100 Gew.-%, vorzugsweise 50 bis 100 Gew.-%, basierend auf dem Gesamtgewicht der Zusammensetzung, beträgt; und/oder
(ii) die Menge des Härtungskatalysators (B) 0 bis etwa 2 Gew.-%, basierend auf dem Gesamtgewicht der Zusammensetzung, beträgt.

14. Klebstoff, Dichtungsmaterial oder Beschichtungsmaterial, umfassend die härtbare Zusammensetzung nach einem der Ansprüche 1 bis 13.

15. Verwendung einer härtbaren Zusammensetzung nach einem der Ansprüche 1 bis 13 als einen Klebstoff, ein Dichtungsmaterial oder ein Beschichtungsmaterial.

## Revendications

1. Composition durcissable comprenant
(A) au moins une résine de siloxane contenant du bore, constituée de motifs constitutionnels de formule (I)
(Y-Z)ₙSiR¹ₘXₚO_{q} (I)
où :
les groupes R¹ peuvent être identiques ou différents et chacun est indépendamment choisi parmi un atome d'hydrogène ou un résidu d'hydrocarbure linéaire, ramifié ou cyclique ayant 1 à 20 atomes de carbone qui peut contenir au moins un hétéroatome ;
X est un groupe hydrolysable, comportant, mais sans s'y limiter, OH (hydroxy), CI, Br, I ou OR² (alcoxy ou aryloxy), où R² est un résidu d'hydrocarbure linéaire, ramifié ou cyclique ayant de 1 à 20 atomes de carbone, qui peut contenir au moins un hétéroatome ;
Z est choisi parmi un résidu d'hydrocarbure linéaire, ramifié ou cyclique ayant 2 à 60 atomes de carbone, qui peut contenir au moins un hétéroatome ;
Y est un groupe contenant du bore ;
n et q sont des nombres entiers de 1 à 3, et m et p sont des nombres entiers de 0 à 2, où n + m + p + q = 4 ;
(B) éventuellement, au moins un catalyseur de durcissement.

2. Composition durcissable selon la revendication 1, dans laquelle R¹ et R² sont indépendamment choisis dans le groupe constitué d'un groupe alkyle en C₁-C₁₂, d'un groupe alcényle en C₂-C₈, d'un groupe alcynyle en C₂-C₈, d'un groupe cycloalkyle en C₃-C₁₀, d'un groupe aryle en C₆-C₁₈ et d'un groupe aralkyle en C₆-C₁₈, lesquels groupes peuvent contenir au moins un hétéroatome.

3. Composition durcissable selon la revendication 2, dans laquelle R¹ et R² sont indépendamment choisis dans le groupe constitué d'un groupe alkyle en C₁-C₈ qui peut contenir au moins un hétéroatome ou d'un groupe aryle en C₆-C₁₈ qui peut contenir au moins un hétéroatome.

4. Composition durcissable selon les revendications 2 à 3, dans laquelle ledit hétéroatome est choisi parmi O, N, S, Si, P, CI, Br ou F.

5. Composition durcissable selon la revendication 3 ou 4, dans laquelle le groupe alkyle en C₁-C₈ est choisi parmi méthyle, éthyle, n-propyle, fluoropropyle, n-butyle, sec-butyle ou tert-butyle.

6. Composition durcissable selon la revendication 3, 4 ou 5, dans laquelle ledit groupe aryle en C₆-C₁₈ est choisi parmi phényle, tolyle ou benzoyle.

7. Composition durcissable selon l'une quelconque des revendications 3 à 6, dans laquelle R¹ et R² sont identiques ou différents et choisis indépendamment parmi méthyle ou phényle.

8. Composition durcissable selon l'une quelconque des revendications 1 à 7, présentant une activité antimicrobienne à l'état durci.

9. Composition durcissable selon l'une quelconque des revendications 1 à 8, dans laquelle le catalyseur de durcissement (B) est choisi parmi des catalyseurs à l'étain, des catalyseurs au titane, des catalyseurs à l'aluminium, ou des catalyseurs au zirconium, ou des mélanges de ceux-ci.

10. Composition durcissable selon l'une quelconque des revendications 1 à 9, dans laquelle la composition durcissable ne comprend pas de catalyseur de durcissement (B).

11. Composition durcissable selon l'une quelconque des revendications 1 à 10, dans laquelle n = 1 à 2 ; m = 0 à 1 ; p = 0 à 1 et q = 2 à 3.

12. Composition durcissable selon l'une quelconque des revendications 1 à 11, comprenant des dimères, pouvant être obtenus par condensation partielle de deux molécules de siloxane contenant du bore, avec des motifs constitutionnels de formule générale (I) avec n = 1 ou 2 ; m = 0, 1, ou 2 ; p = 0, 1 ou 2 ; q = 1 ; et/ou des trimères, pouvant être obtenus par condensation partielle de trois molécules de siloxane contenant du bore, avec des motifs constitutionnels de formule générale (I), dans laquelle le motif organosilicié « central » est de préférence selon la formule générale (I) avec n = 1 ou 2 ; m = 0 ou 1 ; p = 0 ou 1 ; et q = 2 ; et les deux motifs organosiliciés terminaux sont de préférence selon la formule générale (I) avec n = 1 ou 2 ; m = 0, 1, ou 2 ; p = 0, 1 ou 2 ; q = 1.

13. Composition durcissable selon l'une quelconque des revendications 1 à 12, dans laquelle
(i) la quantité de la résine de siloxane contenant du bore (A) est d'environ 15 à environ 100 % en poids, de préférence de 30 à 100 % en poids, de préférence de 50 à 100 % en poids, par rapport au poids total de la composition ; et/ou
(ii) la quantité du catalyseur de durcissement (B) est de 0 à environ 2 % en poids, sur la base du poids total de la composition.

14. Matériau d'adhésion, d'étanchéité, ou de revêtement comprenant la composition durcissable selon l'une quelconque des revendications 1 à 13.

15. Utilisation d'une composition durcissable selon l'une quelconque des revendications 1 à 13 en tant que matériau d'adhésion, d'étanchéité ou de revêtement.
